# EUROPÄISCHE PATENTSCHRIFT

(11) **EP 1 102 674 B1**
(45) Veröffentlichungstag und Bekanntmachung des Hinweises auf die Patenterteilung: **19.06.2002**
(21) Anmeldenummer: 99965351.2
(22) Anmeldetag: 13.07.1999
(51) Int. Cl.: B29C 47/70, B29C 47/06

(54) **VORRICHTUNG ZUR KONTINUIERLICHEN HERSTELLUNG VON NAHTLOSEN KUNSTSTOFFROHREN**
DEVICE FOR CONTINUOUSLY PRODUCING SEAMLESS PLASTIC TUBES
DISPOSITIF POUR LA PRODUCTION EN CONTINU DE TUBES EN MATIERE PLASTIQUE SANS LIGNE DE JOINT

(30) Priorität: 04.08.1998 DE 19835189
(43) Veröffentlichungstag der Anmeldung: 30.05.2001
(73) Patentinhaber: UNICOR GmbH Rahn Plastmaschinen, D-97437 Hassfurt (DE)
(72) Erfinder: NEUBAUER, Gerhard, D-97486 Königsberg (DE)
(74) Vertreter: LOUIS, PÖHLAU, LOHRENTZ & SEGETH
(86) Internationale Anmeldenummer: DE9902182
(87) Internationale Veröffentlichungsnummer: WO0007801

(56) Entgegenhaltungen:
- EP-A- 0 419 983
- EP-A- 0 420 019
- EP-A- 0 542 272
- EP-A- 0 703 055
- WO-A-96/33856
- WO-A-98/08669
- DE-A- 1 964 675
- DE-A- 4 235 101
- DE-U- 29 517 378
- US-A- 3 809 515
- US-A- 3 932 102
- US-A- 4 203 715
- PATENT ABSTRACTS OF JAPAN vol. 007, no. 126 (M-219), 31. Mai 1983 (1983-05-31) & JP 58 045038 A (FURUKAWA DENKI KOGYO KK), 16. März 1983 (1983-03-16)

## Beschreibung

Die Erfindung betrifft eine Vorrichtung zur kontinuierlichen Herstellung von nahtlosen Kunststoffrohren nach dem Oberbegriff des Anspruches 1.

Bei der Herstellung von Kunststoffrohren muss die aus dem Extruder kommende Schmelze einem Ringspalt zugeführt werden, von dem aus sie dann in den eigentlichen Formhohlraum gelangt. Bei der Herstellung von Wellrohren, sei es ein- oder mehrschichtig, darf die Schmelze erst an einer Stelle aus dem Ringspalt austreten, an dem die den Formhohlraum bildenden Corrugator-Formbacken wieder fest aneinander anliegen, d.h. der Formhohlraum wieder völlig geschlossen ist. Je grösser nun der Durchmesser des herzustellenden Rohres ist, umso grösser werden die Einlaufradien der Formbacken, was gleichzeitig bedeutet, dass die den Ringspalt bzw. mehrere Ringspalte für die Schmelze bildenden Düsen der Spritzköpfe entsprechend immer länger werden. Derart lange Düsen sind sowohl in der Herstellung sehr teuer als auch in der Handhabung schwierig, wobei vor allem das Justieren und Einstellen der Rohrwandstärke Schwierigkeiten bereitet, da die Düsen verständlicherweise nicht an den sich bewegenden Formbacken streifen dürfen. Andererseits darf aber auch der Abstand zwischen dem Ringspalt, aus dem die Schmelze austritt, und der Innenwand der wandernden Formbacken nicht zu gross sein, um keine Formprobleme zu erhalten. Diese Schwierigkeiten treten besonders dann sehr stark auf, wenn nicht nur einwandige Wellrohre sondern zwei- oder mehrlagige Wellrohre hergestellt werden sollen, und dies vorzugsweise mit unterschiedlichen Materialien, was bedeutet, dass zwei aufeinanderfolgende Ringspalte aus unterschiedlichen Extrudern gespeist werden müssen, wozu die Kunststoff-Schmelze dann in separaten, konzentrisch ineinander angeordneten Ringkanälen nach vorne bis zum Einspritzpunkt der einzelnen Schmelze-Schichten in den Formhohlraum geführt werden muss. Wenn derart lange und sehr enge Fliesswege vorhanden sind, bauen sich zwangsläufig unerhört hohe Rückdrücke auf, was wiederum zu bestimmten Problemen führt. Beispielsweise aus DE-A-2 403 618, DE-C-2 803 808, DE-C-2 911 833, EP-A-0 208 055, EP-A-0 230 055 sowie US-A-3 677 676 sind in der Praxis verwendete Ausführungsformen für Corrugator-Spritzköpfe bekannt.

Bei den bekannten Corrugator-Spritzköpfen erfolgt die Materialaufteilung zu einem Rohr mittels Torpedo, Pinole oder Wendelverteiler. Wird beispielsweise ein Verbundrohr mit nur einem Extruder hergestellt, d.h. Innen- und Aussenhaut aus dem gleichen Kunststoff, so wird meist nach der ersten Aufteilung zu einem Rohr eine zweite Aufteilung mittels eines nachgeschalteten Schneidringes vorgenommen. Der Transport des Kunststoffes in den Corrugator bzw. Formhohlraum hinein wird bisher stets in konzentrisch zueinander angeordneten, langen Ringkanälen vorgenommen. Dabei befindet sich zumindest die erste Materialaufteilung zu einem Rohr stets in Extrudernähe, wobei sich konstruktionsbedingt Aussendurchmesser ergeben, die weit über dem Innendurchmesser des später zu erzeugenden Rohres liegen. Dies bedeutet natürlich, dass für den Corrugator-Spritzkopf ein entsprechender Platzbedarf berücksichtigt werden muss. Bei Aufteilung des Materials zu einem Rohr mittels eines sog. "Torpedos" wird ausserdem bei bestimmten Kunststoffen beobachtet, dass die zur Festlegung des Torpedos in dem Schmelze-Kanal dienenden Radialstege im Kunststoffohr Marken erzeugen, die möglicherweise sogar zu einer entsprechenden Schwächung und damit minderer Qualität des fertigen Rohres führen. Zumindest ist es aber erforderlich, zur Beseitigung derartiger Marken bzw. Erzielung hinreichender Qualität mit erheblichem Rückdruck im Störmungskanal zu arbeiten, was den Aufwand insgesamt beachtlich erhöht.

Ein weiteres Problem bei der Verbundrohr-Herstellung, aber unter Umständen auch bei der Herstellung einwandiger Kunststoffrohre, ist darin zu sehen, dass anschliessend an die Ringdüsen innerhalb des Formhohlraumes noch Kalibrieroder Kühldome angebaut werden müssen, um das Rohr von innen zu glätten und zu kühlen. Durch diese Bauteile verlängert sich der Spritzkopf nochmals erheblich, wobei das besondere Problem darin besteht, dass der Spritzkopf auf seiner gesamten Länge zwischen Eintritt in den Formhohlraum und Ende des Kühl- bzw. Kallibrierdorns nicht mehr unterstützt oder abgefangen werden kann, wodurch erhebliche Stabilitäts- und Schwingungsprobleme auftreten, was sich bei der Produktion und dem Endprodukt äusserst störend bemerkbar macht.

Eine Vorrichtung mit einem Ringspaltwerkzeug zum Strangpressen von thermoplastischem Kunststoff ist aus der DE-A-2 752 932 bekannt. Dort wird die Kunststoff-Schmelze über einen Ringkanal einem Wendelvorverteiler zugeführt. Zwischen dem Wendelvorverteiler und einem Ringspalt ist eine Verteilerplatte vorgesehen, die eine Vielzahl von im wesentlichen radial verlaufenden, über den Umfang der Verteilerplatte gleichmäßig verteilten Kunststoff-Verteilkanälen aufweist. Diese Ausgestaltung des Werkzeuges gestattet es zwar, die axiale Baulänge zu vermindern. Nachteilig bei dem bekannten Werkzeug ist jedoch, daß die Zuführung der Kunststoff-Schmelze zu der Verteilerplatte über einen Ringspalt erfolgen muß, was zur Folge hat, daß die vorstehend geschilderten konstruktiven Probleme der bekannten Vorrichtungen nach wie vor gegeben sind. Es muß insbesondere in geeigneter Weise für eine Fixierung der die jeweiligen Ringspalten begrenzenden Teile gesorgt werden, was beispielsweise über entsprechende Strömungsteiler (sog. Torpedos) erfolgen kann.

Aus der DE-A-4 218 095 ist ein Kopf zum Strangpressen von schlauchförmigen oder rohrförmigen Vorformlingen aus thermoplastem Kunststoff bekannt, bei dem quasi axial hintereinander zwei Verteilerplatten vorgesehen sind. In der in Strömungsrichtung ersten Verteilerplatte wird dabei die radial von außen her der Form zugeführte Kunststoff-Schmelze über durch Verzweigung gebildete Kanäle axialen Zuführöffnungen in der zweiten Verteilerplatte zugeführt. An diese axialen Zufuhrkanäle schließen dann in der zweiten, in Strömungsrichtung nachgeschalteten Verteilerplatte im wesentlichen teilkreisförmige Kanalabschnitte an, die die Schmelze von außen her dem näher des Zentrums des Formwerkzeugs vorhandenen Austrittsspalt zuführen. Ein Nachteil dieser bekannten Anordnung ist, daß die Verteilerplatten einen verhältnismäßig großen Durchmesser besitzen. Außerdem erfährt die Kunststoff-Schmelze auf ihrem Weg durch die diversen Verteilerkanäle mehrfach eine sehr scharfe Umlenkung, was zu Ablagerungen des Kunststoffes im Strömungsweg und damit zu einer Beeinträchtigung der Qualität der fertigen Erzeugnisse führen kann.

In der US-A-3 743 456 ist eine gattungsgemäße Vorrichtung zur kontinuierlichen Herstellung von nahtlosen Kunststoffrohren beschrieben, bei welcher wenigstens ein aus einem Extruder austretender Kunststoff-Schmelzestrang mittels einer innerhalb des Querschnitts eines Formhohlraumes der Vorrichtung angeordneten, Kunststoff-Verteilkanäle mit gleich langen Fließwegen für die Kunststoff-Schmelze aufweisenden Verteilungseinrichtung aufgespaltet und einem Ringspalt zugeführt wird, aus dem der so gebildete, rohrförmige Kunststoff-Strom in den, beispielsweise von wandernden Corrugator-Formbacken gebildeten, Formhohlraum gelangt, wobei die Kunststoff-Verteilkanäle jeweils in gleichem Winkelabstand voneinander an einer Umfangsfläche der Verteilungseinrichtung enden, welche im Abstand von ihrer Umfangsfläche eine Eintrittsöffnung für die vom Extruder her zugeführte Kunststoff-Schmelze aufweist, die das Ende eines im wesentlichen in Fertigungsrichtung des Rohres verlaufenden Zufuhrkanals für die Kunststoff-Schmelze bildet und von der die Kunststoff-Verteilkanäle ausgehen, wobei der Fließweg der Kunststoff-Schmelze zwischen der Eintrittsöffnung und der Umfangsfläche der Verteilungseinrichtung in allen Kunststoff-Verteilkanälen gleich ist.

Bei dieser bekannten Vorrichtung ist der die gleich langen Kunststoff-Verteilkanäle speisende Zufuhrkanal im Zentrum des Spritzkopfes angeordnet. Die Kunststoff-Verteilkanäle verlaufen geradlinig schräg nach vorne und außen und sind verhältnismäßig kurz. Die Zufuhr des Kunststoffes für eine zweite Lage des herzustellenden Rohres erfolgt über einen gesonderten Ringspalt.

Der Erfindung liegt die Aufgabe zugrunde, eine gattungsgemäße Vorrichtung zur kontinuierlichen Herstellung von nahtlosen Kunststoffrohren vorzuschlagen, die es gestattet, die vorstehend erläuterten Schwierigkeiten des Standes der Technik auszuschalten, wobei insbesondere die Baugröße und Baulänge der Verteilungseinrichtung reduziert und die Möglichkeit geschaffen werden soll, die Eintrittsöffnung für den Kunststoff an beliebiger Stelle vorzusehen.

Zur Lösung dieser Aufgabe wird erfindungsgemäß vorgeschlagen, eine gattungsgemäße Vorrichtung derart auszubilden, dass die Verteilungseinrichtung eine Verteilerplatte mit in einer zur Achse des Formhohlraumes etwa senkrechten Ebene verlaufenden, sich stammbaumartig verzweigenden Kunststoff-Verteilkanälen ist, wobei jeweils ein Kanalabschnitt sich in zwei gleiche weiterführende Kanalabschnitte aufspaltet, die sich in jeweils gleichem Abstand von der letzten Verzweigung wiederum in zwei gleiche weiterführende Kanalabschnitte aufspalten. Man erhält somit an der Umfangsfläche der Verteilerplatte stets eine Anzahl von Zweig-Kanälen, die eine Potenz von 2 ist.

Aus der DE-U-295 17 378 ist zwar ein Extrusionswerkzeug zur Extrusion von schlauchförmigen Strängen aus Kunststoff-Schmelze bekannt, das eine Verteilerplatte mit in einer zur Achse des Formhohlraumes etwa senkrechten Ebene verlaufenden, sich stammbaumartig verzweigenden Kunststoff-Verteilkanälen aufweist, wobei jeweils ein Kanalabschnitt sich in zwei gleiche, weiterführende Kanalabschnitte aufspaltet, die sich in jeweils gleichem Abstand von der letzten Verzweigung wiederum in zwei gleiche, weiterführende Kanalabschnitte aufspalten. Dieses bekannte Werkzeug hat jedoch eine ganz dabei sind die Eintrittsöffnungen nahe dem Umfangsrand des Werkzeuges angeordnet und münden die Enden der Verteilkanäle an der inneren Umfangsfläche der Verteilerplatte aus.

Auch bei dem Spritzkopf gemäß FR-A 2 625 941 sind sich stammbaumartig verzweigende Kunststoff-Verteilkanäle vorgesehen, wobei jeweils ein Kanalabschnitt sich in zwei gleiche, weiterführende Kanalabschnitte aufspaltet, die sich in jeweils gleichem Abstand von der letzten Verzweigung wiederum in zwei gleiche, weiterführende Kanalabschnitte aufspalten. Auch bei diesem Spritzkopf münden jedoch die Verteilkanäle an der inneren Umfangsfläche des Spritzkopfes aus, was einen verhältnismäßig großen Durchmesser bedingt. Darüberhinaus sind die einzelnen Abschnitte der Kunststoff-Verteilkanäle jeweils in einzelnen, plattenartigen Schichten des Spritzkopfes angeordnet, wodurch sich entsprechend der Anzahl der Verzweigungen eine entsprechend große axiale Baulänge für den bekannten Spritzkopf ergibt.

Die erfindungsgemässe Vorrichtung unterscheidet sich erheblich vom Stand der Technik.

Zum einen ist es möglich, Verteilerplatten mit relativ kleinem Durchmesser zu verwenden, so dass diese innerhalb des von den Formbacken od. dgl. gebildeten Formhohlraumes angeordnet werden können. Auf diese Weise ist eine wesentliche Reduzierung der Baulänge des Spritzkopfes in Arbeitsrichtung möglich. Besonders wichtig ist, dass es erfindungsgemäss möglich ist, die Schmelze-Zufuhrkanäle zu den Verteilerplatten sehr grosszügig zu dimensionieren, so dass mit vergleichsweise niedrigen Drücken gearbeitet werden kann, trotzdem aber ausreichend Schmelze dem Ringspalt bzw. den Ringspalten zugeführt wird. Zur Verbindung der Verteilerplatte mit dem entsprechenden Spritzkopf-Flansch am Extruder können einfachste und äusserst stabile Bauteile verwendet werden, die sowohl eine erhebliche Kosteneinsparung als auch eine beachtliche Verbesserung der mechanischen Stabilität erreichen lassen. Die spezielle Art der Verteilung der Kunststoff-Schmelze in den Verteilerplatten hat darüberhinaus den Vorteil, dass beispielsweise alle Probleme, die sich bei der sog. "Torpedo-Technik" infolge der Teilung des Schmelze-Stromes an den Stegen ergeben, nicht beobachtet werden. Es ist insbesondere nicht festgestellt worden, dass sich irgendwelche Marken der Schmelze-Teilströme, die aus der Verteilerplatte austreten, auf dem fertigen Rohr abzeichnen, wie dies bei den Stegen, die zur Festlegung eines Torpedos erforderlich sind, meist beobachtet wurde. Die Ausbildung der Verteilerplatte mit den entsprechenden Verteil-Kanälen ist sehr leicht möglich. Es kann z.B. die Verteilerplatte in ein Boden- und ein Deckelteil unterteilt werden, wobei dann in der Grenzfläche die entsprechenden Kanäle ausgespart werden. Bei Ausführungsformen mit mehreren Verteilerplatten, d.h. Vorrichtungen zur Herstellung mehrwandiger Rohre, wäre es sogar denkbar, das Bodenteil einer Verteilerplatte gleichzeitig als Deckelteil der anderen Verteilerplatte zu verwenden. Ein weiterer Vorteil der erfindungsgemässen Technik ist der, dass infolge der geringen Baugrösse und Baulänge sowie der Möglichkeit, sehr stabile Halterungen für die Verteilerplatten einzusetzen, auch eine sehr saubere Justierung des Austritts-Ringspaltes im Formhohlraum möglich ist. Wegen der erheblichen Länge der bekannten Spritzdüsen auftretende Justier- und Schwingungsprobleme werden bei einer Vorrichtung gemäss der Erfindung nicht beobachtet. Schliesslich kann die Eintrittsöffnung für die Kunststoff-Schmelze nahezu an beliebiger Stelle der Verteilerplatte vorgesehen werden, wobei sie allerdings meist relativ nahe dem Zentrum der Verteilerplatte ausgebildet werden wird. Auf jeden Fall besteht ohne Schwierigkeiten die Möglichkeit, die Verteilerplatte, ggf. auch mehrere hintereinander angeordnete Verteilerplatten, in ihrem Zentrum mit einem Durchtritt für Versorgungsleitungen, z.B. für Wasser, Strom etc., zu versehen, was bisher wegen der üblicherweise vom Zentrum des Spritzkopfes ausgehenden Ringkanäle grosse Schwierigkeiten bereitet hat. Schliesslich ist auch die Versorgung eines mehrere Ringspalte aufweisenden Spritzkopfes aus mehreren Extrudern oder aus einem Extruder unter entsprechender Aufteilung des Schmelze-Stromes im Vergleich zum Stand der Technik wesentlich einfacher, da jeweils nur vergleichsweise grosse Speisekanäle für die Kunststoff-Schmelze, die zu den jeweiligen Eintrittsöffnungen führen, vorgesehen werden müssen.

Als besonders vorteilhaft hat es sich erwiesen, wenn die an der Umfangsfläche der Verteilerplatte mündenden Endabschnitte der Verteilkanäle unter Bildung eines Wendelverteilers jeweils bogenförmig, z.B. teilkreisförmig verlaufen und derart angeordnet sind, dass die Kunststoff-Schmelze sowohl einen Drehimpuls in Umfangsrichtung als auch einen Impuls in radialer Richtung erfährt. Bei einer derartigen Ausbildung der Endabschnitte der Verteilkanäle erzielt man eine besonders gleichmässige Verteilung der Schmelze über den Umfang der Verteilerplatten und infolgedessen auch einen entsprechend gleichmässigen Schmelze-Austritt aus dem zugehörigen Ringspalt. Darüberhinaus wird so gewährleistet, dass sich trotz des Vorhandenseins mehrerer Austrittskanäle für die Schmelze entlang des Umfanges der Verteilerplatte ein durchgehendes Kunststoff-Schmelze-Rohr ergibt, das insbesondere nicht irgendwelche Marken infolge der vorherigen Aufteilung des Schmelze-Stromes zeigt.

Zur Herstellung mehrschichtiger Kunststoffrohre wird vorteilhafterweise derart vorgegangen, dass in Bewegungsrichtung des zu bildenden Rohres, d.h. in Fabrikationsrichtung, hintereinander eine Mehrzahl von Verteilerplatten angeordnet ist, wobei die Eintrittsöffnungen für die Kunststoff-Schmelze bei den einzelnen Verteilerplatten gegeneinander versetzt sind und der Zufuhrkanal für die jeweils in Bewegungsrichtung folgende(n) Verteilerplatte(n) die vorher angeordnete(n) Verteilerplatte(n) durchsetzt. Im allgemeinen wird man dabei die Zufuhrkanäle symmetrisch, d.h. zumindest in gleichem Abstand von der Form-Mittelachse anordnen. Der Durchtritt für den Zufuhrkanal einer anderen Verteilerplatte lässt sich in einer Verteilerplatte ohne grosse Probleme unterbringen, weil hierzu nur die Verteilkanäle entsprechend um den den Durchtritt der Schmelze für andere Verteilerplatten ermöglichenden Durchbruch angeordnet werden müssen.

Schliesslich liegt es im Rahmen der Erfindung, dass unterschiedliche Verteilerplatten von unterschiedlichen Extrudern gespeist sind, wobei gerade die Vorrichtung gemäss der Erfindung aber auch in einfacher Weise die Möglichkeit bietet, beispielsweise bei dreiwandigen Rohren zwei der Verteilerplatten von einem Extruder und die dritte Verteilerplatte von einem anderen Extruder zu speisen. In gleicher Weise können auch sämtliche Verteilerplatten von einem Extruder gespeist werden, wobei dann ein entsprechender Verteiler, z.B. eine Verteilerbox oder Y-Verteiler zwischen Extruder und Zufuhrkanal zu den einzelnen Verteilerplatten angeordnet wird.

Weitere Merkmale, Einzelheiten und Vorteile der Erfindung ergeben sich aus der folgenden Beschreibung eines Ausführungsbeispieles einer Vorrichtung zur Herstellung von zweiwandigen Wellrohren anhand der Zeichnung.

Es zeigen -:
- Figur 1: schematisch und im Längsschnitt den Bereich einer Vorrichtung zur Herstellung doppelwandiger Wellrohre, in dem die Kunststoff-Schmelze aus Verteilerplatten austritt und in Corrugator-Formbacken zu einem Wellrohr geformt wird;
- Figur 2: eine Draufsicht auf den stromab liegenden Teil einer Verteilerplatte entsprechend II-II in Figur 1;
- Figur 3: schematisch eine Vorrichtung zur Herstellung eines doppelwandigen Wellrohres unter Benutzung zweier Extruder, und
- Figuren 4 und 5: schematisch zwei unterschiedliche Anordnungen zur Herstellung doppelwandiger Wellrohre ausgehend von einem Extruder.

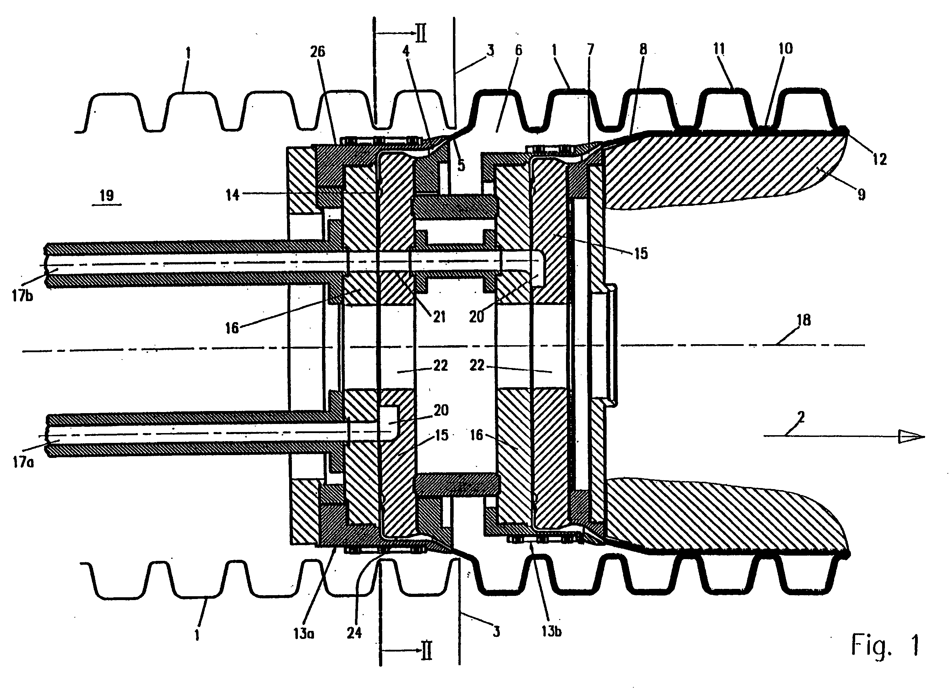

In Figur 1 ist schematisch bei 1 die entsprechend gewellte Innenwand eines Corrugator-Formbackens gezeigt, wobei in Fertigungsrichtung 2 des Wellrohres mehrere entsprechende Formbacken unmittelbar aufeinanderfolgen. Die Anlagefläche zweier Formbacken ist durch die Linie 3 in Figur 1 angedeutet.

Die Herstellung des mehrwandigen Wellrohres erfolgt in an sich bekannter Weise derart, dass ein erster, aus einem Ringspalt 4 austretender, rohrförmiger Strom 5 von Kunststoff-Schmelze durch geeignete Mittel, z.B. in dem Raum 6 aufgebrachten Überdruck, gegen die Innenwand 1 des entsprechenden, sich in Fertigungsrichtung 2 gleichmässig bewegenden Formbackens angelegt wird. Auf den Ringspalt 4 folgt in Fertigungsrichtung 2 dann ein weiterer Ringspalt 7, aus dem ebenfalls ein rohrförmiger Strom 8 einer Kunststoff-Schmelze austritt. Dieses Kunststoff-Schmelze-Rohr wird durch einen Dorn 9, dessen genaue Ausbildung vom jeweils verwendeten Kunststoff und der speziellen Rohrform etc. abhängig und deswegen nicht näher erläutert ist, gegen die Bereiche 10 der Aussenwand 11 des zu bildenden Wellrohres angedrückt, wobei die Temperatur während des Andrückens des inneren Rohres 8 des Wellrohres gegen die Aussenwand 11 so gewählt wird, dass in den Bereichen 10 eine Verschweissung von Aussenwand 11 und Innenwand 12 erfolgt und so ein entsprechendes Wellrohr mit gerippter Aussenwand 11 und glatter Innenwand 12 entsteht. Hinsichtlich der Bildung des Wellrohres selbst entspricht die in Figur 1 skizzierte Vorrichtung vollständig dem Stand der Technik.

Der wesentliche Unterschied zwischen der Vorrichtung gemäss Figur 1 und dem Stand der Technik ist in der Art zu sehen, wie die Kunststoff-Schmelze den Ringspalten 4 und 7 zugeführt wird.

Aus Figur 1 ist ersichtlich, dass zu diesem Zweck zwei insgesamt mit 13a bzw. 13b bezeichnete Verteilerplatten vorgesehen sind. Diese beiden Verteilerplatten sind grundsätzlich gleich aufgebaut. Allerdings ist der Durchmesser des Ringschlitzes 4 für die Aussenwand 11 im gezeigten Ausführungsbeispiel etwas grösser als der Durchmesser des Ringschlitzes 7 für die Innenwand 12 und entsprechend sind auch die Durchmesser der Verteilerplatten 13a und 13b etwas unterschiedlich. Dies ist deswegen erforderlich, um zu verhindern, dass die bereits an der Innenwand 1 der Formbacken anliegende Aussenwand 11 des Kunststoff-Wellrohres mit der Verteilerplatte 13b in Berührung kommt.

Jede der Verteilerplatten 13a und 13b umfasst zwei plattenförmige Elemente, nämlich eine erste Platte 15, die als Verteilkanäle dienende Aussparungen 14 aufweist, sowie eine zweite Platte 16, die die Aussparungen 14 abdeckt und damit die Verteilkanäle vervollständigt.

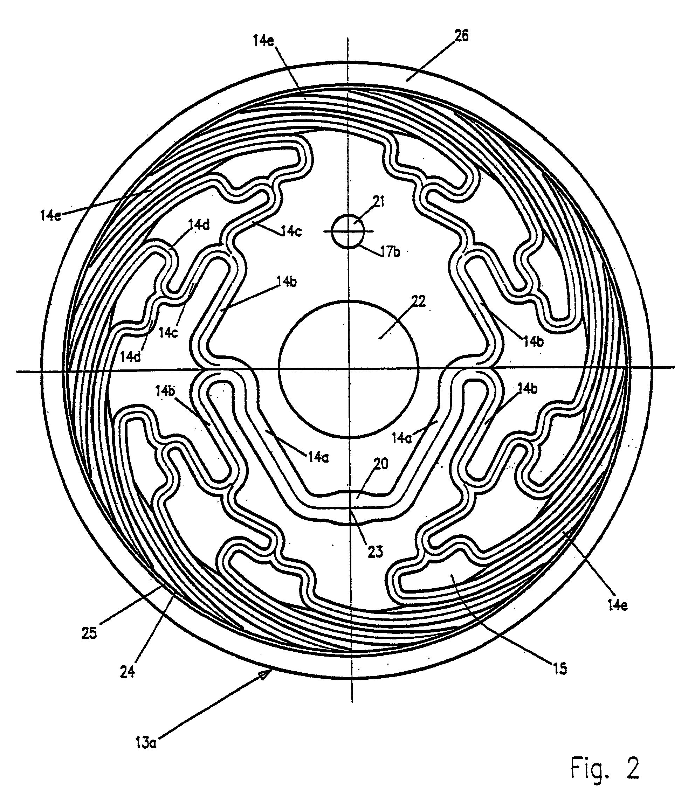

Die Zuführung der Kunststoff-Schmelze vom Extruder zu den Verteilerplatten 13a, 13b erfolgt über im wesentlichen in Fertigungsrichtung 2 verlaufende Zufuhrkanäle 17, die gegenüber der Mittelachse 18 des von den Corrugator-Formbacken gebildeten Formhohlraumes versetzt sind und vergleichsweise grossen Querschnitt aufweisen können. Diese Zufuhrkanäle 17 enden jeweils in einer Eintrittsöffnung 20 der entsprechenden Verteilerplatten 13a, 13b, von der dann die Verteilkanäle (sh. Figur 2) ausgehen.

Während der Zufuhrkanal 17a in der ersten Verteilerplatte 13a (für die Aussenwand 11) endet, durchsetzt der zweite Zufuhrkanal 17b die erste Verteilerplatte 13a in Form beispielsweise einer Bohrung 21.

Im Zentrum der beiden Verteilerplatten 13a und 13b ist jeweils ein Durchlass 22 vorgesehen, durch den beispielsweise Versorgungsleitungen für Strom, Luft oder Wasser zum Kühl- bzw. Kalibrierdorn 9 geführt werden können.

In Figur 2 ist ein Beispiel dafür, wie die Verteilkanäle in der Verteilerplatte 13a angeordnet sein können, schematisch dargestellt.

Von der Eintrittsöffnung 20 gehen in entgegengesetzter Richtung zwei erste Verteilkanal-Abschnitte 14a, die von entsprechenden Nuten als Aussparungen gebildet sein können, aus. Diese Verteilkanal-Abschnitte 14a verzweigen sich dann im gleichen Abstand von der Mitte 23 der Eintrittsöffnung 20 in wiederum jeweils zwei gleiche Verteilkanal-Abschnitte 14b, die einen gegenüber dem Verteilkanal-Abschnitt 14a verminderten Querschnitt besitzen und ebenfalls von in der ersten Platte 15 vorgesehenen Nuten gebildet sind. Die - nunmehr vier - Verteilkanal-Abschnitte 14b verzweigen sich erneut, jeweils im gleichen Abstand von der Verzweigung der Verteilkanal-Abschnitte 14a, in jeweils wiederum zwei Verteilkanal-Abschnitte 14c mit wiederum reduziertem Querschnitt. Die acht Verteilkanal-Abschnitte 14c verzweigen sich dann erneut - wiederum in gleichem Abstand von der Verzweigung der Abschnitte 14b - zu jeweils zwei Verteilkanal-Abschnitten 14d. Diese sechzehn Abschnitte 14d gehen dann jeweils in gleichem Abstand von der zugehörigen Verzweigung der Verteilkanal-Abschnitte 14c in bogenförmige Verteilkanal-Abschnitte 14e über, die an der Umfangsfläche 24 der ersten Platte 15 enden.

Diese Umfangsfläche 24 der ersten Platte 15 umgibt in geringem Abstand und unter Ausbildung eines Ringspaltes 25 ein in Figur 2 nur andeutungsweise gezeigter Aussenring 26, dessen Querschnitt aus Figur 1 ersichtlich ist.

Die Führung der Kanal-Abschnitte 14e, wie sie in Figur 2 gezeigt ist, in Verbindung mit dem entlang der Umfangsfläche 24 der ersten Platte 15 gebildeten Ringspalt hat die Wirkung eines Wendelverteilers, wobei durch die gewählte Anordnung die über die Verteilkanal-Abschnitte 14a bis 14e strömende Kunststoff-Schmelze sowohl einen Drehimpuls in Umfangsrichtung als auch einen Impuls in radialer Richtung erfährt. Durch die beschriebene, aus Figur 2 im wesentlichen ersichtliche Führung der Endabschnitte 14e der Verteilkanäle wird erreicht, dass sich die einzelnen, aus den Endabschnitten 14e austretenden Kunststoff-Teilströme sehr gut vermischen und in dem Spalt 25 zwischen Umfangsfläche 24 der Platte 15 und Aussenring 26 ein sehr homogener, rohrförmiger Kunststoff-Strom erzeugt wird, der dann entsprechend in den eigentlichen Austritts-Ringspalt 4 bzw. bei der Verteilerplatte 13 in den Ringspalt 7 austritt und die jeweiligen Rohrwände 11 bzw. 12 bildet.

Aus Figur 1 ist ersichtlich, dass die Stirnflächen der Verteilerplatten 13a und 13b weitgehend frei bleiben. Auf diese Weise ist es möglich, sehr massive Befestigungsmittel für die Verteilerplatten 13a und 13b einzusetzen, wodurch eine saubere Justierung und entsprechend stabile Halterung möglich ist. Weiterhin zeigt Figur 1, dass der Querschnitt der Verteilerplatten insgesamt geringer gehalten werden kann als der Durchmesser der Ringspalte 4 bzw. 7. Auf diese Weise ist es möglich, die Ring-Verteilung des Kunststoffes insgesamt innerhalb des Querschnittes des Formhohlraumes 19 unterzubringen und auch die Halterung weit in den Formhohlraum hinein reichen zu lassen.

Selbstverständlich können Verteilerplatten entsprechend den Verteilerplatten 13a bzw. 13b des gezeigten Ausführungsbeispieles auch verwendet werden, wenn nur ein einschichtiges Rohr hergestellt werden soll. In diesem Fall ist dann eben nur eine einzige Verteilerplatte erforderlich. Weiterhin können die Verteilerplatten selbstverständlich auch eingesetzt werden, wenn Rohre anderer Art, beispielsweise glatte, nahtlose Rohre, gefertigt werden sollen. In diesem Falle ist es auch nicht unbedingt erforderlich, wandernde Formbacken vorzusehen. Hier könnte unter Umständen mit stationärer Aussenform und einem entsprechenden Kern bzw. Dorn gearbeitet werden.

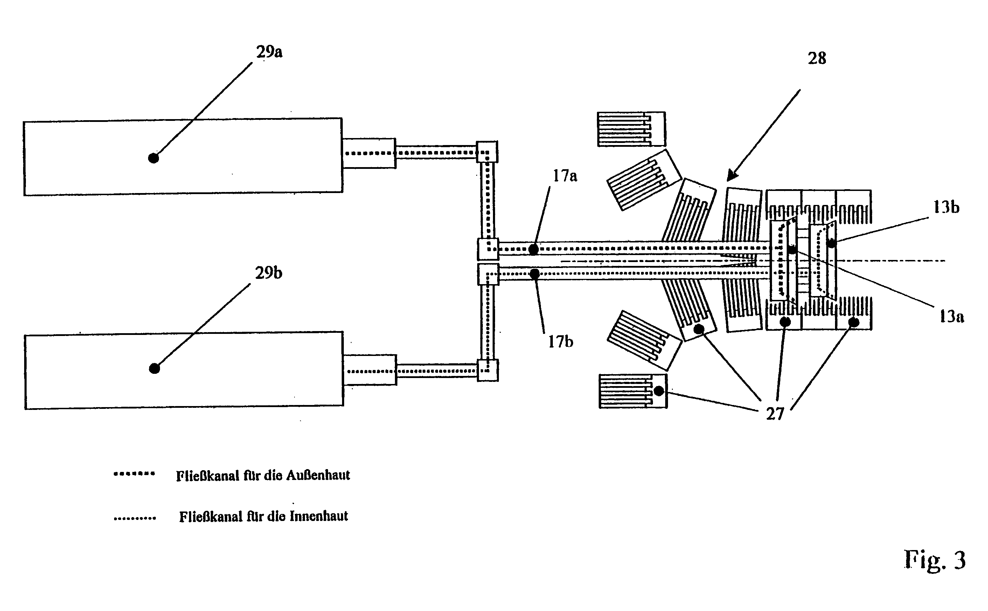

In den Figuren 3 bis 5 sind schematisch Anordnungen gezeigt, wie unter Verwendung des Erfindungsgedankens, d.h. unter Verwendung der speziellen Verteilerplatten, Vorrichtungen zur Herstellung von Wellrohren aufgebaut werden können.

In den Figuren 3 bis 5 ist jeweils rechts eine bewegliche, von umlaufenden Formbacken-Hälften 27 gebildete Form 28 gezeigt. In dieser beweglichen Form 28 sind - entsprechend dem Ausführungsbeispiel der Figur 1 - zwei Verteilerplatten 13a, 13b angeordnet, die über Zufuhrkanäle 17a, 17b gespeist werden.

Bei dem Ausführungsbeispiel der Figur 3 werden Innen- und Aussenwand des mehrlagigen Wellrohres aus unterschiedlichen Kunststoffen erzeugt. Dementsprechend sind auch zwei Extruder, nämlich ein Extruder 29a, der die Kunststoff-Schmelze für die Aussenwand 11 liefert, sowie ein Extruder 29b zur Erzeugung der Kunststoff-Schmelze für die Innenwand 12 vorgesehen.

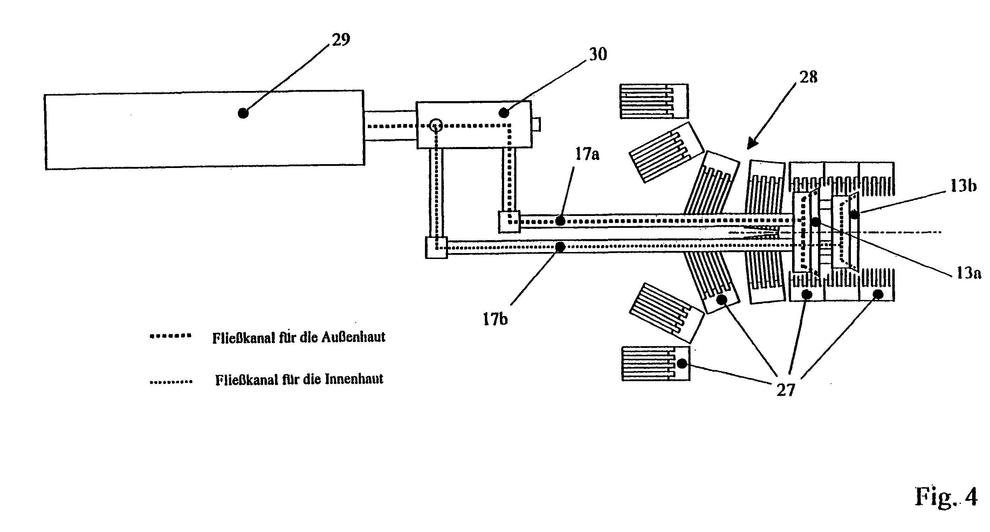

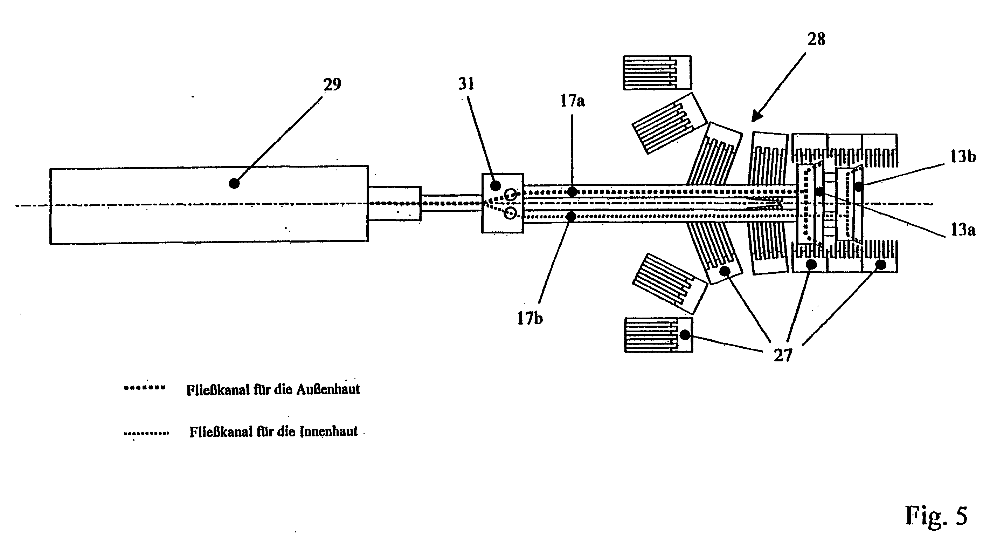

Bei den Ausführungsbeispielen der Figuren 4 und 5 werden zwar ebenfalls zweiwandige Wellrohre hergestellt. Allerdings sollen Innen- und Aussenwand aus dem gleichen Material bestehen, weshalb nur ein Extruder 29 vorgesehen ist.

Der Unterschied zwischen den Ausführungsformen der Figuren 4 und 5 besteht nun im wesentlichen in der Art der Verteilung des aus dem Extruder 29 austretenden Kunststoff-Stromes in die beiden Zufuhrkanäle 17a und 17b.

Während bei der Ausführungsform der Figur 4 eine konventionelle Verteilerbox 30 vorgesehen ist, die über vergleichsweise lange Zufuhrkanäle 17a, 17b mit den Verteilerplatten 13a, 13b verbunden ist, erfolgt die Verteilung des aus dem Extruder 29 austretenden Kunststoff-Stromes bei dem Ausführungsbeispiel der Figur 5 über einen Y-Verteiler 31, an den sich unmittelbar die Zufuhrkanäle 17a, 17b anschliessen. Eine derartige Anordnung wäre bei konventioneller Technik nicht denkbar, weil es nicht möglich ist, mittels eines Y-Verteilers konzentrisch zueinander verlaufende rohrförmige Schmelze-Ströme zu erzeugen. Die Gestaltung gemäss Figur 5 stellt somit eine ganz erhebliche Vereinfachung gegenüber dem bisher Üblichen dar.

Wie sich aus vorstehender Beschreibung ergibt, liegen wegen der geringen Erstreckung der Verteilerplatten in Fertigungsrichtung 2 während der Verteilung der Schmelze in radialer Richtung im Schmelze-Strom keine oder nur sehr geringe Geschwindigkeits-Vektoren in Fertigungsrichtung vor, was sich günstig auf die entsprechende Vermischung und Schlauchbildung auswirkt. Es wäre sogar denkbar, die Verteilkanäle so anzuordnen und auszubilden, dass innerhalb der Verteilkanäle hinsichtlich der Fertigungsrichtung 2 negative Geschwindigikeits-Vektoren vorliegen, d.h. die Schmelze entgegen der Herstellungsrichtung bewegt wird.

Infolge der geringen Baugrösse, der Stabilität und der Variationsmöglichkeiten bietet somit die beschrieben Vorrichtung eine Vielzahl von Möglichkeiten, die Eigenschaften von mit der Vorrichtung erzeugten Rohren in Abhängigkeit von dem eingesetzten Kunststoff zu beeinflussen.

## Patentansprüche

1. Vorrichtung zur kontinuierlichen Herstellung von nahtlosen Kunststoffrohren, bei welcher wenigstens ein aus einem Extruder (29; 29a, 29b), austretender Kunststoff-Schmelzestrang mittels einer innerhalb des Querschnitts eines Formhohlraumes (19) der Vorrichtung angeordneten, Kunststoff-Verteilkanäle (14a bis 14e) mit gleich langen Fließwegen für die Kunststoff-Schmelze aufweisenden Verteilungseinrichtung aufgespaltet und einem Ringspalt (4, 7) zugeführt wird, aus dem der so gebildete, rohrförmige Kunststoff-Strom (5, 8) in den, beispielsweise von wandernden Corrugator-Formbacken (27) gebildeten, Formhohlraum (19) gelangt, wobei die Kunststoff-Verteilkanäle ( 14a bis 14e) jeweils in gleichem Winkelabstand voneinander an einer Umfangsfläche (24) der Verteilungseinrichtung enden, welche im Abstand von ihrer Umfangsfläche (24) eine Eintrittsöffnung (20) für die vom Extruder (29; 29a, 29b) her zugeführte Kunststoff-Schmelze aufweist, die das Ende eines im wesentlichen in Fertigungsrichtung (2) des Rohres verlaufenden Zufuhrkanals für die Kunststoff-Schmelze bildet und von der die Kunststoff-Verteilkanäle (14a bis 14e) ausgehen, wobei der Fließweg der Kunststoff-Schmelze zwischen der Eintrittsöffnung (20) und der Umfangsfläche der Verteilungseinrichtung in allen Kunststoff-Vertenkanälen (14a bis 14e) gleich ist,
**dadurch gekennzeichnet,**
**daß** die Verteilungseinrichtung eine Verteilerplatte (13a, 13b) mit in einer zur Achse (18) des Formhohlraumes (19) etwa senkrechten Ebene verlaufenden, sich stammbaumartig verzweigenden Kunststoff-Verteilkanälen (14a bis 14e) ist, wobei jeweils ein Kanalabschnitt (14a, 14b, 14c) sich in zwei gleiche weiterführende Kanalabschnitte (14b, 14c, 14d) aufspaltet, die sich in jeweils gleichem Abstand von der letzten Verzweigung wiederum in zwei gleiche weiterführende Kanalabschnitte (14c, 14d) aufspalten.

2. Vorrichtung nach Anspruch 1,
**dadurch gekennzeichnet,**
**daß** die an der Umfangsfläche (24) der Verteilerplatte (13a, 13b) mündenden Endabschnitte (14e) der Verteilkanäle (14a bis 14e) unter Bildung eines Wendelverteilers jeweils teilkreisförmig verlaufen und derart angeordnet sind, daß die Kunststoff-Schmelze sowohl einen Drehimpuls in Umfangsrichtung als auch einen Impuls in radialer Richtung erfährt.

3. Vorrichtung nach Anspruch 1 oder 2,
**dadurch gekennzeichnet,**
**daß** die Eintrittsöffnung (21) für die Kunststoff-Schmelze in die Verteilerplatte (13a, 13b) nahe dem Zentrum der Verteilerplatte angeordnet ist.

4. Vorrichtung nach einem der vorhergehenden Ansprüche,
**dadurch gekennzeichnet,**
**daß** die Verteilerplatte (13a, 13b) zentrisch einen Durchlass (22) für Versorgungseinrichtungen, z.B. Leitungen für Luft, Strom, Kühlmittel, aufweist.

5. Vorrichtung nach einem der vorhergehenden Ansprüche,
**dadurch gekennzeichnet,**
**dass** zur Herstellung mehrschichtiger Kunststoffrohre in Bewegungsrichtung (2) des zu bildenden Rohres hintereinander eine Mehrzahl von Verteilerplatten (13a, 13b) angeordnet ist, wobei die
Eintrittsöffnungen (21) für die Kunststoff-Schmelze bei den einzelnen Verteilerplatten (13a, 13b) gegeneinander versetzt sind und der Zufuhrkanal (17b) für die jeweils in Bewegungsrichtung (2) folgende(n) Verteilerplatte(n) (13b) die vorher angeordnete(n) Verteilerplatte(n) (13a) durchsetzt.

6. Vorrichtung nach Anspruch 5,
**dadurch gekennzeichnet,**
**dass** unterschiedliche Verteilerplatten (13a, 13b) von unterschiedlichen Extrudern (29a, 29b) gespeist sind.

## Claims

1. Device for continuously producing seamless plastic tubes, in which at least one strand of polymer melt emerging from an extruder (29; 29a, 29b) is split by means of a manifold arranged within the cross section of a mould cavity (19) of the device and having polymer distributing channels (14a to 14e) with flow paths of equal length for the polymer melt and is fed to an annular slit (4, 7), from which the tubular polymer stream (5, 8) formed in this way passes into the mould cavity (19), formed for example by travelling corrugator mould jaws (27), the polymer distributing channels (14a to 14e) respectively ending at the same angular distance from one another at a circumferential face (24) of the manifold, which has at a distance from its circumferential face (24) an inlet opening (20) for the polymer melt fed from the extruder (29; 29a, 29b), which forms the end of a feed channel for the polymer melt, running substantially in the direction of production (2) of the tube, and from which the polymer distributing channels (14a to 14e) extend, the flow path of the polymer melt between the inlet opening (20) and the circumferential face of the manifold being the same in all the polymer distributing channels (14a to 14e), **characterized in that** the manifold is a manifold plate (13a, 13b) with polymer distributing channels (14a to 14e) running approximately perpendicular to the axis (18) of the mould cavity (19) and branching in the manner of a genealogical tree, one channel portion (14a, 14b, 14c) in each case splitting into two identical continuing channel portions (14b, 14c, 14d), which, at the same distance in each case from the last branch, in turn split into two identical continuing channel portions (14c, 14d).

2. Device according to Claim 1, **characterized in that** the end portions (14e) of the distributing channels (14a to 14e) opening out at the circumferential face (24) of the manifold plate (13a, 13b) in each case run in the form of part-circles, forming a helix distributor, and are arranged in such a way that the polymer melt undergoes both a rotational impulse in the circumferential direction and an impulse in the radial direction.

3. Device according to Claim 1 or 2, **characterized in that** the inlet opening (21) for the polymer melt is arranged in the manifold plate (13a, 13b) close to the centre of the manifold plate.

4. Device according to one of the preceding claims, **characterized in that** the manifold plate (13a, 13b) centrically has an aperture (22) for supply means, for example lines for air, electric power, coolant.

5. Device according to one of the preceding claims, **characterized in that**, for producing multilayer plastic tubes, a plurality of manifold plates (13a, 13b) are arranged one behind the other in the direction of movement (2) of the tube to be formed, the inlet openings (21) for the polymer melt being offset with respect to one another in the case of the individual manifold plates (13a, 13b), and the feed channel (17b) for the manifold plate(s) (13b) which respectively follow in the direction of movement (2) passing through the manifold plate(s) (13a) which are arranged in front.

6. Device according to Claim 5, **characterized in that** different manifold plates (13a, 13b) are fed by different extruders (29a, 29b).

## Revendications

1. Dispositif pour la production en continu d'un tube en matière plastique sans ligne de joint, du type dans lequel au moins un cordon de matière plastique fondue sortant d'un extrudeur (29, 29a, 29b) est, au moyen d'un dispositif de répartition comportant un canal de répartition de matière plastique (14 à 14e) disposé à l'intérieur de la section transversale d'un espace creux de mise en forme (19) du dispositif, et de chemins d'écoulement de longueurs égales pour la matière fondue, est subdivisé et acheminé à une fente annulaire (4, 7) à la sortie de laquelle le courant de matière plastique en forme de tube ainsi formé (5, 8) atteint l'espace creux de mise en forme (19) comportant par exemple une paroi ondulée (27), les canaux de répartition de la matière plastique (14 à 14e) se terminant à une surface périphérique (24) du dispositif de répartition chacun à la même distance angulaire les uns des autres, lequel dispositif présentant, à une certaine distance de sa surface périphérique (24) un orifice d'entrée (20) pour la matière plastique fondue provenant de l'extrudeur (29, 29a, 29b), lequel orifice constitue pour la matière plastique fondue l'extrémité d'un canal d'alimentation s'étendant pratiquement dans la direction d'achèvement (2) du tube, et duquel sortent les canaux de répartition de la matière plastique (14 à 14e), le chemin d'écoulement de la matière plastique fondue entre l'orifice d'entrée (20) et la surface périphérique du dispositif de répartition étant le même pour tous les canaux de répartition de la matière plastique (14 à 14e), **caractérisé en ce que** le dispositif de répartition consiste en une plaque de répartition (13a, 13b) avec des canaux de répartition de matière plastique (14 à 14e) s'étendant dans un plan à peu près perpendiculaire à l'axe (18) de l'espace creux de mise en forme (19) en se ramifiant à la manière de branches d'un arbre, chaque section de canal (14a-14e) se subdivisant en deux autres sections suivantes de canaux (14b-14d) qui chacune se subdivise à son tour, à une même distance de la dernière ramification, en deux autres sections suivantes de canaux (14c-14d).

2. Dispositif selon la revendication 1, **caractérisé en ce que** les sections terminales (14e) des canaux de répartition (14 à 14e) débouchant sur la surface périphérique (24) de la plaque de répartition (13a, 13b), se déroulent en formant chacune un répartiteur partiellement hélicoïdal et sont disposées de manière telle que la matière plastique fondue reçoit une impulsion de rotation dans la direction périphérique ainsi qu'une impulsion en direction axiale.

3. Dispositif selon la revendication 1 ou 2, **caractérisé en ce que** l'orifice d'introduction (21) de la matière plastique fondue est situé dans la plaque de répartition au voisinage du centre de la plaque de répartition.

4. Dispositif selon l'une quelconque des revendications précédentes, **caractérisé en ce que** la plaque de répartition (13a, 13b) présente en son centre un passage (22) pour les systèmes d'alimentation, par exemple des conduits d'air, de courant électrique, d'agent réfrigérant.

5. Dispositif selon l'une quelconque des revendications précédentes, **caractérisé en ce que**, en vue de la production de tubes en matière plastique à plusieurs couches, dans la direction d'avancée (2) du tube à réaliser sont disposées l'une derrière l'autre une pluralité de plaques de répartition (13a, 13b), les orifices d'introduction de la matière plastique fondue étant décalés l'un par rapport à l'autre dans les plaques de répartition individuelles (13a, 13b), et le canal d'arrivée (17b) pour chacune des plaques de répartition (13b) qui se suivent traversant la (les) plaque(s) de répartition disposée(s) avant elle(s).

6. Dispositif selon la revendication 5, **caractérisé en ce que** les différentes plaques de répartition (13a, 13b) sont alimentées par des extrudeurs différents (29a, 29b).
